# EUROPÄISCHE PATENTSCHRIFT

(11) **EP 1 795 292 B1**
(45) Veröffentlichungstag und Bekanntmachung des Hinweises auf die Patenterteilung: **14.09.2011**
(21) Anmeldenummer: 06024999.2
(22) Anmeldetag: 04.12.2006
(51) Int. Cl.: B23K 3/06

(54) **Drahtvorschubeinrichtung**
Wire feeding apparatus
Dispositif d'avance de fil

(30) Priorität: 07.12.2005 DE 102005058308
(43) Veröffentlichungstag der Anmeldung: 13.06.2007
(73) Patentinhaber: Fehrenbach, Matthias, 72144 Dusslingen (DE)
(72) Erfinder: Fehrenbach, Matthias, 72144 Dusslingen (DE)
(74) Vertreter: Kohler Schmid Möbus

(56) Entgegenhaltungen:
- DE-A1- 3 727 343
- DE-A1- 3 922 560
- DE-C1- 3 623 292

## Beschreibung

Die Erfindung betrifft eine Vorschubeinrichtung zum linearen Vorschieben eines Drahtes längs einer Achsrichtung mittels einer Fördereinrichtung, wobei das in Förderrichtung des Drahtes freie Drahtende auf eine Gegenfläche auftrifft, dabei eine in Gegenrichtung zur Förderrichtung wirkende Druckreaktionskraft aufnimmt und in Achsrichtung längs des Drahtes weiterleitet, mit einer Sensoreinheit zur Messung der vom Draht aufgenommenen Druckreaktionskraft und mit einer Steuerungs- bzw. Regelungseinheit, die aufgrund der gemessenen Druckreaktionskraft ein Ansteuersignal an die Fördereinrichtung abgibt, welches die durch die Fördereinrichtung bewirkte lineare Verschiebung des Drahtes beeinflusst, insbesondere regelt.

Eine derartige Vorrichtung ist bekannt aus der DE 37 27 343 A1.

Beim Einsatz von dünnen Weich- und Hartlotdrähten mittels Vorschubeinrichtungen kommt es häufig zu Störungen bei automatisch betriebenen Lötanlagen. Die Gründe sind oft nicht ausreichend erwärmte Lötstellen und ungeregelter Vortrieb des Lotdrahtes. Dadurch kann der Lotdraht abknicken und die Lötung wird nicht ordnungsgemäß ausgeführt.

In der DE 37 27 343 A1 wird ein Verfahren zum Dosieren der Lotmenge einer Lötvorrichtung durch Regeln der Vorschubgeschwindigkeit eines Lotdrahtes mit automatischer Heranführung einer bestimmten, abzuschmelzenden Lotdrahtmenge vorgeschlagen. Dazu soll eine Lotdraht-Vorschubeinrichtung, mit welcher Lotdraht mittels eines Motors über ein Getriebe gefördert wird, auf einem in Richtung auf die Lötstelle und von dieser weg verfahrbaren Schlitten montiert sein, der in dieser Richtung und der Gegenrichtung jeweils gegen eine Feder anläuft. Je nach aktueller Andruckkraft des Lotdrahtendes an der Lötstelle soll dadurch die Vorschubbewegung des Schlittens und somit auch des geförderten Lotdrahtes in den von den Federkräften und Federwegen gegebenen Grenzen geregelt werden. Die Konzentration auf den wesentlichen Lötparameter der Abschmelzgeschwindigkeit ermöglicht eine rasche Optimierung des Prozesses sowie eine Vereinfachung der Prozesssicherung durch Erfassen und Auswerten weniger Messgrößen, nämlich Abschmelzgeschwindigkeit und Wärmezufuhr. Dadurch ergeben sich auch bei den Anlagekosten erhebliche Kostenvorteile.

Nachteilig bei dieser bekannten Vorschubeinrichtung sind allerdings die Art und der Aufbau des vorgeschlagenen Regelsystems. Zum einen ist die Schlittenführung mechanisch aufwändig und Platz raubend, zum anderen äußerst verschmutzungsanfällig und durch den dadurch niemals reproduzierbar gleichen Reibungswiderstand nur sehr grob über längere Zeiträume in einem halbwegs gleichmäßigen Betriebsmodus betreibbar. Zudem geht die aktuelle Andruckkraft des Lotdrahtendes an der Lötstelle über die Schlittenfedern nur sehr ungenau, ungleichmäßig und im Langzeitverhalten nur unzureichend in das Regelverhalten der Vorrichtung ein, sodass keine sonderlich feinfühlige und vor allem keine verlässliche Regelung des Vorschubvorgangs damit möglich ist, was wiederum die Qualität der Lötung über längere Betriebsphasen erheblichen und unvorhersehbaren Schwankungen unterwirft.

Aufgabe der vorliegenden Erfindung ist es daher, eine gattungsgemäße Vorrichtung der eingangs beschriebenen Art dahin gehend zu verbessern, dass eine mechanisch unaufwändige, räumlich kompakte und kostengünstig herstellbare Vorschubeinrichtung mit einer feinfühligen und dauerhaft zuverlässigen, gegen äußere Störeinflüsse wie Verschmutzung und mechanische Reibung unempfindlichen Vorschubregelung in Abhängigkeit von der in Förderrichtung wirkenden Druckreaktionskraft ausgestattet wird.

Erfindungsgemäß wird eine Vorschubeinrichtung gemäß Anspruch 1 vorgeschlagen, die diese Aufgabe auf ebenso überraschend einfache wie wirkungsvolle Art und Weise dadurch löst, dass die Sensoreinheit einen elektromechanischen Sensor umfasst, der starr mit der Vorschubeinrichtung verbunden ist und ein elektronisches Messsignal in Abhängigkeit von der gemessenen Druckreaktionskraft erzeugt, welches als Eingangssignal an die Steuerungs- bzw. Regelungseinheit weitergeleitet wird.

Dadurch werden auf simple Weise die Vorteile der oben beschriebenen bekannten Vorschubeinrichtung gemäß der gattungsbildenden DE 37 27 343 A1 genutzt, wobei aber keine schlittenartigen Führungseinheiten benötigt werden, sodass die Vorrichtung frei von Reibungswiderständen ist. Die erfindungsgemäße Verwendung eines elektromechanischen Sensors und die elektronische Übertragung seiner Messsignale stellt eine dauerhaft empfindliche und gleich bleibende Berücksichtung der gemessenen Druckreaktionskraft in der Steuerungs- bzw. Regelungseinheit sicher. Durch die vorgesehene starre Verbindung des Sensors mit der Vorschubeinrichtung wird die Vorrichtung einerseits räumlich kompakt und andererseits im Dauerbetrieb unempfindlicher gegen äußere Störeinflüsse.

Die Vorteile der Erfindung kommen in besonderer Weise zum Tragen bei einer Ausführungsform, bei der die Vorschubeinrichtung Teil einer Löt- oder Schweißanlage ist, die eine ansteuerbare, insbesondere regelbare Heizvorrichtung zur Erhitzung des freien Drahtendes umfasst, wobei die Heizleistung der Heizvorrichtung durch Ansteuersignale von der Steuerungs- bzw. Regelungseinheit beeinflusst werden kann. Mit der erfindungsgemäßen Vorschubeinrichtung gelingt es, mit geringster möglicher (weil besonders schneller) Wärmezufuhr und bei weitestgehender Reduzierung der Prozesszeiten eine optimale Abschmelzung des Zusatzwerkstoffs beim Verbinden von Bauteilen durch Schmelzschweißen bzw. Löten sicherzustellen. Drahtvorschub und Heizzeitpunkt wirken hierbei intelligent als "Aktio" und "Reaktio" über den gesamten Regel-Produktionsprozess zusammen. Hierdurch erreicht man eine Verringerung der Wärmebelastung der zu verbindenden Bauteile auf ein Minimum. Die Temperatur an der Stelle der Zusatzdrahtzufuhr liegt knapp über der Schmelztemperatur des Zusatzwerkstoffs. Diese kraftsensible Lotdraht-Abschmelzung ist besonders wichtig bei Verwendung sehr weicher und/oder sehr dünner Lotdrähte, beispielsweise für Feinstlötungen.

Fertigungstechnisch relativ einfach realisierbar und im Betrieb aufgrund ihrer einfachen Wartungsmöglichkeiten besonders leicht handhabbar ist eine Ausführungsform der Erfindung, bei der die Sensoreinheit in die Vorschubeinrichtung einsteckbar oder einschraubbar ist.

Besonders kompakt und daher preiswert herstellbar ist eine Ausführungsform der erfindungsgemäßen Vorschubeinrichtung, bei der die Steuerungs- bzw. Regelungseinheit in der Vorschubeinrichtung integriert bzw. einstückig mit dieser verbunden ist.

Vorteilhaft sind auch Ausführungsformen, bei denen die Sensoreinheit und die Steuerungs- bzw. Regelungseinheit eine räumliche Einheit bilden.

Besonders bevorzugt ist eine Ausführungsform der Erfindung, bei der die Sensoreinheit und die Steuerungs- bzw. Regelungseinheit räumlich unmittelbar an die Fördereinrichtung angrenzend angeordnet sind.

Die Sensoreinheit kann bei Ausführungsform der erfindungsgemäßen Vorschubeinrichtung ein im Handel in vielerlei Formen und Größen leicht erhältliches Piezoelement umfassen.

Bei alternativen Ausführungsformen umfasst die Sensoreinheit ein ebenfalls handelsübliches Hallsensorelement.

Bei Weiterbildungen dieser Ausführungsformen kann das Sensorelement als bewegliches Teil einen Biegebalken aufweisen, der an einem Ende fest eingespannt und starr mit der Vorschubeinrichtung verbunden ist, während sein anderes, bewegliches Ende ein vom Auslenkungsgrad des Biegebalkens abhängiges elektromagnetisches Signal an einen Signalaufnehmer abgibt.

Eine einfache mechanische Überlastsicherung wird bei vorteilhaften Weiterbildungen dadurch erreicht, dass in der Sensoreinheit ein oberer und ein unterer mechanischer Anschlag vorgesehen sind, die die maximale Auslenkung beweglichen Endes des Biegebalkens in jeder Bewegungsrichtung begrenzen.

Bei der erfindungsgemäßen Vorschubeinrichtung, ist eine erste Vorrichtung zur Ermittlung der Vorschubgeschwindigkeit des Drahtes vorgesehen , da diese Größe einen ganz entscheidenden Einfluss auf die Qualität des zu regelnden Betriebsvorgangs hat.

Eine vorteilhafte Weiterbildung dieser Ausführungsform sieht vor, dass die Fördereinrichtung einen, vorzugsweise elektrisch angetriebenen, eine Drehbewegung erzeugenden Vortriebsmotor umfasst, dessen Drehgeschwindigkeit proportional zur der Vorschubgeschwindigkeit des Drahtes ist.

Besonders einfach ist eine Weiterbildung, bei der die erste Vorrichtung zur Ermittlung der Vorschubgeschwindigkeit des Drahtes einen an der Fördereinrichtung angeordneten Tachometer umfasst, wobei mittels des Tachometers die Drehgeschwindigkeit des Vortriebsmotors erfasst wird.

Alternativ kann bei anderen Weiterbildungen der Vortriebsmotor ein Schrittmotor sein, wobei dann zur Ermittlung der Vorschublänge und der Vorschubgeschwindigkeit des Drahtes eine Schrittzählung eingesetzt wird.

Die mechanisch einfache und kostengünstig herzustellende Konstruktion der erfindungsgemäßen der Vorschubeinrichtung zeichnet sich dadurch aus, dass die Fördereinrichtung ein vom Vortriebsmotor angetriebenes Förderrad umfasst, welches mit seinem drehenden Umfang gegen den zu fördernden Draht quer zu dessen Achsrichtung drückt, wobei auf der gegenüberliegenden Seite des Drahtes ein Sekundärrad als Gegendruckritzel angeordnet ist, das die Andruckkraft des Förderrades auf den durchlaufenden Draht drehend aufnimmt und als Inkrementalwertgeber dienen kann.

Bei der erfindungsgemäßen Vorschubeinrichtung ist eine von der ersten Vorrichtung zur Ermittlung der Vorschubgeschwindigkeit des Drahtes unabhängige zweite Vorrichtung zur Ermittlung der Vorschubgeschwindigkeit des Drahtes vorgesehen, die die für den Vortrieb des Drahtes besonders wichtige Regelgröße ebenfalls überwacht und bei Fehlern im ersten Überwachungssystem eine notwendige Redundanz darstellt.

Ganz besonders einfach und kostengünstig herstellbar ist eine Kombination aus beiden Ausführungsformen, wobei die zweite Vorrichtung zur Ermittlung der Vorschubgeschwindigkeit des Drahtes eine Einrichtung zur Detektion der aktuellen Drehwinkellage des Sekundärrades umfasst, aus welcher die Vorschublänge und über eine einfache Zeitmessung auch die Vorschubgeschwindigkeit des Drahtes entnommen werden kann.

Die erste und auch die zweite Vorrichtung geben zur Ermittlung der Vorschubgeschwindigkeit des Drahtes elektronische Messsignale an die Steuerungs- bzw. Regelungseinheit ab, welche dann entsprechend verarbeitet werden.

In den Rahmen der vorliegenden Erfindung fällt auch ein Verfahren zum Betrieb einer Vorschubeinrichtung der oben beschriebenen Art, das sich dadurch auszeichnet, dass von der Steuerungs- bzw. Regelungseinheit aufgrund der elektronischen Messsignale aus der Sensoreinheit elektronische Regelsignale an die Fördereinrichtung abgegeben werden, mittels denen die von der Fördereinrichtung hervorgerufene Vorschubgeschwindigkeit des Drahtes in Abhängigkeit von der gemessenen Druckreaktionskraft auf einen vorgegebenen jeweiligen Sollwert geregelt wird. Auf diese Weise verlieren bauteilspezifische Toleranzen, beispielsweise von Spalten, Höhen-Geometrien, Werkstoffen, Beschichtungen ihren Einfluss auf das Ergebnis der Verbindung. Die Beschaffenheit des verwendeten Drahtes, d. h. dessen Dicke, Materialzusammensetzung, Schmelzfähigkeit und dergleichen werden angemessen berücksichtigt.

Bevorzugt ist eine Verfahrensvariante, bei welcher der mit der ersten Vorrichtung ermittelte Istwert der Vorschubgeschwindigkeit des Drahtes mit dem von der Steuerungs- bzw. Regelungseinheit vorgegebenen Sollwert verglichen und gegebenenfalls die von der Steuerungs- bzw. Regelungseinheit an die Fördereinrichtung abgegeben Regelsignale entsprechend angepasst werden. Dies ermöglicht einen Ausgleich von Erwärmungsfehlern über den Lotdrahtvorschub, eine Vermeidung des Abknickens des Lotdrahtes durch kraftsensible Regelung sowie eine optimale Anpassung an Lötzonen mit unterschiedlichen Wärme- und Lotmengen- und Aufsetzkraftbedarf durch entsprechende Ansteuerung. Bei einer besonders bevorzugten Verfahrensvariante werden in der Steuerungs- bzw. Regelungseinheit die voneinander unabhängigen elektronischen Messsignale aus der ersten und der zweiten Vorrichtung zur Ermittlung der Vorschubgeschwindigkeit des Drahtes miteinander verglichen und bei einer Differenz der beiden ermittelten Vorschubgeschwindigkeiten erfolgt eine entsprechende Korrektur der an die Fördereinrichtung abgegebenen Regelsignale. Die Druckreaktionskraft steht als Echtzeitsignal zur Start-Auslösung für Folgeprozesse zur Verfügung. Dadurch lässt sich ein taktzeitoptimales Zusammenspiel von Abschmelzgeschwindigkeit und Wärmezufuhr, Drahtvorschubsgeschwindigkeit, Wärmezufuhr und Automationsfolgeprozessen erreichen. Die wirtschaftlichen Produktionsgrenzen können optimal eingeregelt werden und es ergibt sich ein Höchstmaß an gleich bleibender Lötqualität, auch wenn mehrere Störeinflüsse auftreten. Zu solchen Störungen gehören beispielsweise Temperaturänderungen der Wärmequelle, die auf Stromschwankungen, Verschmutzung oder bei Verwendung von Gasbrennern auf Durchflussänderungen der Gasmenge zurückzuführen sind.

Insbesondere beim Einsatz der erfindungsgemäßen Vorschubeinrichtung als Teil einer Löt- oder Schweißanlage wird bei einer vorteilhaften Variante des oben beschriebenen Verfahrens aus der gemessenen Vorschubgeschwindigkeit des Drahtes in der Steuerungs- bzw. Regelungseinheit die aktuelle Abschmelzgeschwindigkeit des erhitzten freien Drahtendes ermittelt und daraus ein Regelsignal zur Regelung der Heizleistung der Heizvorrichtung abgeleitet. Sobald der Zusatzwerkstoff abzuschmelzen beginnt wird durch Vergleich der realen Abschmelzgeschwindigkeit mit einer Sollgeschwindigkeit die Leistung der Wärmequelle derart geregelt, dass sich ein optimales Abschmelzverhalten des Zusatzwerkstoffs ergibt, insbesondere konstante Abschmelzgeschwindigkeit und gezielte Abschmelzgeschwindigkeiten durch entsprechende zeitliche Geschwindigkeitssollwertvorgaben. Zu einem ersten Zeitpunkt t1 wird der Lotvorschub aktiviert. Infolge zu geringer Temperatur des Bauteils und dadurch bedingt fehlender Abschmelzung des Lotdrahts wird gegebenenfalls die abgegebene Leistung der Wärmequelle erhöht, bis schließlich zu einem späteren Zeitpunkt t2 der Sollwert der Abschmelzgeschwindigkeit erreicht ist. Jetzt erfolgt ein Regeleingriff derart, dass in diesem Fall eine kontinuierliche Abschmelzung des Lotdrahts erzielt wird. Die Zeitdifferenz Δt = t2 - t1 liegt in der Größenordnung 0,1s bis 0,5s. Die kurzzeitige Erhöhung der Leistung der Wärmequelle beim extern gesteuerten Abschluss des Prozesses ermöglicht ein problemloses Zurückziehen des Zusatzwerkstoffs ohne Kleben.

Zu den Lötparametern, die sich ändern können, zählen insbesondere die Größe, das Material und die Masse der miteinander zu verlötenden Teile, deren Anfangstemperatur sowie die Zusammensetzung und die Dicke des Lotdrahtes. Alle diese Komponenten führen dazu, dass sich die Lötzeit, d. h. diejenige Zeitspanne, die eine vorgegebene Lotdrahtmenge braucht, um nach dem Aufsetzen auf die Lötstelle abzuschmelzen, ändert. Das vorgeschlagene Verfahren hingegen gleicht Erwärmungsfehler durch Regulierung der Vorschubkraft oder der Vorschubgeschwindigkeit des Lotdrahtes selbständig aus und vermeidet auf diese Weise außerdem ein Abknicken des Lotdrahtendes beim Aufsetzen auf der Lötstelle. Diese kraftsensible Lotdraht-Abschmelzung ist besonders wichtig bei Verwendung sehr weicher und/oder sehr dünner Drähte ( Lotdrähte ) für z. B. Feinstlötungen.

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen.

Die einzelnen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt, welche in der nachfolgenden Beschreibung näher erläutert werden.

Es zeigen:
- Fig. 1: eine schematische' Seitenansicht einer als Löt- oder Schweißanlage ausgestalteten Ausführungsform der erfindungsgemäßen Vorschubeinrichtung; und
- Fig. 2: eine Seitenansicht der Ausführungsform nach Fig. 1 um 90° um eine Hochachse gedreht.

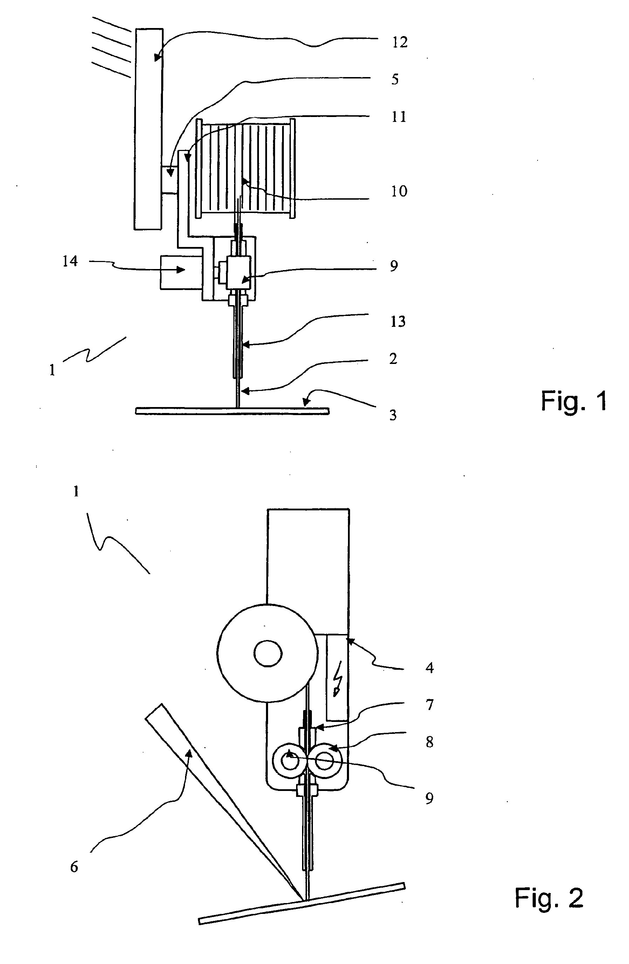

Die in der Zeichnung dargestellte Vorschubeinrichtung **1** dient zum linearen Vorschieben eines Drahtes längs einer Achsrichtung mittels einer Fördereinrichtung, wobei das in Förderrichtung des Drahtes freie Drahtende **2** auf eine Gegenfläche **3** auftrifft, dabei eine in Gegenrichtung zur Förderrichtung wirkende Druckreaktionskraft aufnimmt und in Achsrichtung längs des Drahtes weiterleitet. Die Vorschubeinrichtung 1 umfasst eine Sensoreinheit zur Messung der vom Draht aufgenommenen Druckreaktionskraft und eine Steuerungs- bzw. Regelungseinheit **4,** die aufgrund der gemessenen Druckreaktionskraft ein Ansteuersignal an die Fördereinrichtung abgibt, welches die durch die Fördereinrichtung bewirkte lineare Verschiebung des Drahtes regelt. Die Sensoreinheit umfasst einen elektromechanischen Sensor **5,** insbesondere einen Hallsensor oder ein Piezoelement. Dieser ist starr mit der Vorschubeinrichtung 1 verbunden und erzeugt ein elektronisches Messsignal in Abhängigkeit von der gemessenen Druckreaktionskraft, welches als Eingangssignal an die Steuerungs- bzw. Regelungseinheit 4 weitergeleitet wird. Dabei ist die Vorschubeinrichtung 1 Teil einer Löt- oder Schweißanlage, die eine ansteuerbare, insbesondere regelbare Heizvorrichtung **6** zur Erhitzung des freien Drahtendes 2 umfasst, deren Heizleistung durch Ansteuersignale von der Steuerungs- bzw. Regelungseinheit 4 beeinflusst werden kann. Die Heizvorrichtung 6 ist in Fig. 2 nur sehr schematisch angedeutet und kann beispielsweise einen Laser, aber auch andere an sich bekannte Heizelemente enthalten.

Die Fördereinrichtung enthält einen elektrisch angetriebenen, eine Drehbewegung erzeugenden Vortriebsmotor **7,** dessen Drehgeschwindigkeit proportional zur der Vorschubgeschwindigkeit des Drahtes ist. Falls als Vortriebsmotor 7 ein Schrittmotor eingesetzt wird, können die Vorschublänge und die Vorschubgeschwindigkeit des Drahtes durch eine simple Schrittzählung ermittelt werden. Andernfalls kann hierfür ein ebenso einfaches Tachometer zur Messung der Drehgeschwindigkeit des Vortriebsmotors 7 verwendet werden. Außerdem ist in der Fördereinrichtung des gezeigten Ausführungsbeispiels ein vom Vortriebsmotor 7 angetriebenes Förderrad **8** vorgesehen, welches mit seinem drehenden Umfang gegen den zu fördernden Draht quer zu dessen Achsrichtung drückt. Auf der gegenüberliegenden Seite des Drahtes ist ein Sekundärrad **9** als Gegendruckritzel angeordnet, das die Andruckkraft des Förderrades 8 auf den durchlaufenden Draht drehend aufnimmt. Über eine einfache Detektion der aktuellen Drehwinkellage des Sekundärrades 9 können die Vorschublänge und mittels einer Zeitmessung auch die aktuelle Vorschubgeschwindigkeit des Drahtes auf einem von der Umdrehungs- oder Schrittzahlmessung des Vortriebsmotors 7 unabhängigen zweiten Weg ermittelt werden.

Die Vorschubeinrichtung 1 einschließlich einer Drahtspule **10,** von welcher der zu fördernde Draht abgewickelt wird, ist an einem Halter **11** montiert, der seinerseits an einem schwenkbar gelagerten Automationsarm oder Roboterarm befestigt sein kann. Der starr mit der Vorschubeinrichtung verbundene elektromechanische Sensor 5 stützt sich zur Messung der Druckreaktionskraft des Drahtes gegen eine starre Wand **12** ab.

Der Draht wird von einem auf der Drahtspule 10 befindlichen Wickel abgespult und durchläuft ein Führungsrohr **13,** das derart angeordnet ist, dass das aus dem Rohr 13 herausragende freie Drahtende 2 auf eine Lötstelle auf der Gegenfläche 3 ausgerichtet ist. An dem zur Lötstelle weisenden Ende des Halters 11 ist das Führungsrohr 3 befestigt. Zwischen Drahtspule 10 und Führungsrohr 3 ist die Fördereinrichtung angeordnet. Diese hat zwei vorzugsweise geriffelte Reibrollen, nämlich das Förderrad 8 und das Sekundärrad 9, zwischen denen der Lotdraht hindurchgeführt ist. Das Sekundärrad 9 ist über einen Hubmagneten **14** schwenkbar gelagert und drückt über diesen in Richtung des Förderrads 8, wodurch der Lotdraht reibschlüssig zwischen den beiden Rollen eingespannt wird. Zum Vorschub des Lotdrahtes dient der Vortriebsmotor 7, dessen Drehrichtung umkehrbar ist. Der Vortriebsmotor 7 ist ebenso wie die Drahtspule 10 am Halter 11 und damit am Kraftsensor 5 befestigt.

Das kraftproportionale Signal des Kraftsensors 5 wird vor der Prozessdurchführung eines Lötzyklus durch die elektronische Schaltung genullt. Dadurch werden die Einflüsse von Masse und Schräglage der Vorschubeinrichtung 1 sowie des Gewichtes der Drahtspule 10 eliminiert. Solche Nullungsschaltungen sind an sich bekannt und brauchen daher an dieser Stelle nicht näher erläutert zu werden. Die Größe des bleibenden, dem Regelkreis des Vortriebsmotors 7 zugeführten Signals hängt somit nur noch von der Größe einer auf das freie Drahtende 2 entgegen dessen Vorschubrichtung ausgeübten Kraft, die über den Kraftaufnehmer 5 ermittelt wird, ab.

Der Anstieg des Messsignals aus dem Auftreffen des freien Drahtendes 2 auf die Lötstelle kann dazu benutzt werden, um den Messkreis für die richtige Lotmenge zu aktivieren, welche mit Hilfe eines Vergleichers den Vortriebsmotor 7 abschaltet, nachdem die Lötstelle erhitzt und eine vorgegebene Länge des Lotdrahtes abgeschmolzen ist.

Mit dem Ansteigen der Temperatur an der Lötstelle wird das dort befindliche Lot zunächst weich und dann schmelzflüssig. Die vom freien Ende 2 des Lotdrahtes ausgeübte Gegenkraft nimmt demzufolge stark ab und die in der Steuerung hinterlegte Soll-Lotdrahtvorschublänge wird der Lötstelle zugeführt.

Entsteht beim Aufsetzen des freien Drahtendes 2 auf die Lötstelle eine vom Kraftaufnehmer 5 registrierte Andruckkraft, so erreicht der Regelkreis durch die daraus resultierende Änderung der Signalfolge eines Inkrementalgebers den an einem Stellglied vorgewählten Sollwert Lotmenge entsprechend später. Dies bedeutet, dass auch bei schlechter Wärmeeinbringung stets die für den Lötprozess erforderliche Erwärmung stattgefunden hat.

Die Lötvorrichtung eignet sich aufgrund ihrer vorgestellten Eigenschaften insbesondere auch zur Verwendung mit Handhabungsgeräten bestückten automatischen Lötstationen. Hierzu ist der Halter 11 der Lötvorrichtung als Adapter ausgebildet.

Durch diese Maßnahmen ist eine optimale Anpassungsfähigkeit der Lötvorrichtung an Lötstellern mit unterschiedlichen Wärme-, Lotmengen- und Aufsetzkraftbedarf durch entsprechende Programmierung bzw. Regelungsverhalten gewährleistet. Erwärmungsfehler werden über die Geschwindigkeiten des Lotdrahtvorschubs ausgeglichen. Von besonderer Bedeutung ist, dass durch die kraftsensible Regelung des Lotdrahtvorschubs ein Knicken selbst sehr empfindlicher Lotdrähte zuverlässig vermieden wird.

## Patentansprüche

1. Vorschubeinrichtung (1) zum linearen Vorschieben eines Drahtes längs einer Achsrichtung mittels einer Fördereinrichtung, die ein von einem Vortriebsmotor (7) angetriebenes Förderrad (8) umfasst, welches mit seinem drehenden Umfang gegen den zu fördernden Draht quer zur Achsrichtung drückt, wobei auf der gegenüberliegenden Seite des Drahtes ein Sekundärrad (9) als Gegendruckritzel angeordnet ist, das die Andruckkraft des Förderrades (8) auf den durchlaufenden Draht drehend aufnimmt, wobei die Vorschubeinrichtung (1) einen Halter (11) umfasst, an dem zum einen eine Drahtspule (10) montiert ist, von welcher der zu fördernde Draht abgewickelt wird, und an dem zum anderen der Vortriebsmotor (7) befestigt ist, wobei das in Förderrichtung des Drahtes freie Drahtende (2) in Förderrichtung auf eine Gegenfläche auftrifft und dabei eine in Gegenrichtung zur Förderrichtung wirkende Druckreaktionskraft aufnimmt und in Achsrichtung längs des Drahtes weiterleitet, mit einer Steuerungs- bzw. Regelungseinheit (4), die ein Ansteuersignal an die Fördereinrichtung abgibt, welches die durch die Fördereinrichtung bewirkte lineare Verschiebung des Drahtes beeinflusst, insbesondere regelt, wobei eine Sensoreinheit zur Messung der vom Draht aufgenommenen Druckreaktionskraft vorgesehen ist, die ein elektronisches Messsignal in Abhängigkeit von der gemessenen Druckreaktionskraft erzeugt, welches als Eingangssignal an die Steuerungs- bzw. Regelungseinheit (4) weitergeleitet wird, wobei die Steuerungs- bzw. Regelungseinheit (4) aufgrund der gemessenen Druckreaktionskraft ein Ansteuersignal zur Steuerung bzw. Regelung der durch die Fördereinrichtung bewirkten linearen Verschiebung des Drahtes an die Fördereinrichtung abgibt, und wobei eine erste Vorrichtung zur Ermittlung der Vorschubgeschwindigkeit des Drahtes vorgesehen ist, die elektronische Messsignale an die Steuerungs- bzw. Regelungseinheit (4) abgibt,
**dadurch gekennzeichnet,**
**dass** die Sensoreinheit einen elektromechanischen Sensor (5) umfasst, der starr über den Halter (11) mit der Vorschubeinrichtung (1) verbunden ist,
und **dass** eine von der ersten Vorrichtung zur Ermittlung der Vorschubgeschwindigkeit des Drahtes unabhängige zweite Vorrichtung zur Ermittlung der Vorschubgeschwindigkeit des Drahtes vorgesehen ist, die ebenfalls elektronische Messsignale an die Steuerungs- bzw. Regelungseinheit (4) abgibt.

2. Vorschubeinrichtung nach einem der vorhergehenden Ansprüche, **dadurch gekennzeichnet, dass** die Vorschubeinrichtung (1) Teil einer Löt- oder Schweißanlage ist, die eine ansteuerbare, insbesondere regelbare Heizvorrichtung (6) zur Erhitzung des freien Drahtendes (2) umfasst, und dass die Heizleistung der Heizvorrichtung (6) durch Ansteuersignale von der Steuerungs- bzw. Regelungseinheit (4) beeinflusst werden kann.

3. Vorschubeinrichtung nach einem der vorhergehenden Ansprüche, **dadurch gekennzeichnet, dass** die Steuerungs- bzw. Regelungseinheit (4) in der Vorschubeinrichtung (1) integriert bzw. einstückig mit dieser verbunden ist.

4. Vorschubeinrichtung nach Anspruch 3, **dadurch gekennzeichnet, dass** die Sensoreinheit und die Steuerungs- bzw. Regelungseinheit (4) eine räumliche Einheit bilden.

5. Vorschubeinrichtung nach Anspruch 4, **dadurch gekennzeichnet, dass** die Sensoreinheit und die Steuerungs- bzw. Regelungseinheit (4) räumlich unmittelbar an die Fördereinrichtung angrenzend angeordnet sind.

6. Vorschubeinrichtung nach einem der Ansprüche 1 bis 5, **dadurch gekennzeichnet, dass** die Sensoreinheit ein Piezoelement umfasst.

7. Vorschubeinrichtung nach einem der Ansprüche 1 bis 5, **dadurch gekennzeichnet, dass** die Sensoreinheit ein Hallsensorelement umfasst.

8. Verfahren zum Betrieb einer Vorschubeinrichtung (1) nach einem der vorhergehenden Ansprüche, **dadurch gekennzeichnet, dass** von der Steuerungs- bzw. Regelungseinheit (4) aufgrund der elektronischen Messsignale aus der Sensoreinheit elektronische Regelsignale an die Fördereinrichtung abgegeben werden, mittels denen die von der Fördereinrichtung hervorgerufene Vorschubgeschwindigkeit des Drahtes in Abhängigkeit von der gemessenen Druckreaktionskraft auf einen vorgegebenen jeweiligen Sollwert geregelt wird.

9. Verfahren nach Anspruch 8, **dadurch gekennzeichnet, dass** der mit der ersten Vorrichtung ermittelte Istwert der Vorschubgeschwindigkeit des Drahtes mit dem von der Steuerungs- bzw. Regelungseinheit (4) vorgegebenen Sollwert verglichen und gegebenenfalls die von der Steuerungs- bzw. Regelungseinheit (4) an die Fördereinrichtung abgegeben Regelsignale entsprechend angepasst werden.

10. Verfahren nach Anspruch 9, **dadurch gekennzeichnet, dass** in der Steuerungs- bzw. Regelungseinheit (4) die voneinander unabhängigen elektronischen Messsignale aus der ersten und der zweiten Vorrichtung zur Ermittlung der Vorschubgeschwindigkeit des Drahtes miteinander verglichen werden und bei einer Differenz der beiden ermittelten Vorschubgeschwindigkeiten eine entsprechende Korrektur der an die Fördereinrichtung abgegebenen Regelsignale erfolgt.

11. Verfahren nach einem der Ansprüche 9 oder 10 zum Betrieb einer Vorschubeinrichtung (1) nach Anspruch 2, **dadurch gekennzeichnet, dass** in der Steuerungs- bzw. Regelungseinheit (4) aus der gemessenen Vorschubgeschwindigkeit des Drahtes die aktuelle Abschmelzgeschwindigkeit des erhitzten freien Drahtendes (2) ermittelt und daraus ein Regelsignal zur Regelung der Heizleistung der Heizvorrichtung (6) abgeleitet wird.

## Claims

1. Feeding device (1) for linear feeding of a wire along an axial direction by means of a conveying device which includes a conveying wheel (8) driven by a drive motor (7), the conveying wheel (8), with its rotating circumference, pressing transversely with respect to the axial direction, against the wire that is to be conveyed, a secondary wheel (9) being arranged on the opposite side of the wire as a counter pressure pinion which, whilst rotating, takes up the adpressing force of the conveying wheel (8) on the travelling wire; the feeding device (1) including a holder (11), on which on the one hand there is mounted a wire spool (10) from which the wire that is to be conveyed is unwound, and to which on the other hand the drive motor (7) is affixed; and the wire end (2), which is free in the conveying direction of the wire, impacting in the conveying direction against a counter surface and thereby taking up a pressure reaction force that acts in a direction opposite to the conveying direction and is transmitted in the axial direction along the wire; and having a control unit respectively regulating unit (4) which delivers a control signal to the conveying device that influences, especially regulates, the linear displacement of the wire effected by the conveying device; a sensor unit being provided for measuring the pressure reaction force taken up by the wire which, in dependence upon the measured pressure reaction force, generates an electronic measurement signal that is transmitted as input signal to the control unit respectively regulating unit (4); and the control unit respectively regulating unit (4) delivering to the conveying device a control signal for control, respectively regulation, based on the measured pressure reaction force caused by the linear displacement of the wire by the conveying device; and a first contrivance for ascertaining the feeding velocity of the wire being provided which delivers electronic measurement signals to the control unit respectively regulating unit (4),
**characterised in that**
the sensor unit includes an electro mechanical sensor (5) which is rigidly connected with the feeding device (1) via the holder (11), and **in that** a second contrivance for ascertaining the feeding velocity of the wire is provided which is independent from the first contrivance for ascertaining the feeding velocity of the wire and which likewise delivers electronic measurement signals to the control unit respectively regulating unit (4).

2. Feeding device according to one of the preceding claims, **characterised in that** the feeding device (1) forms part of a soldering or welding installation which includes a controllable, especially regulatable, heating means (6) for heating the free wire end (2), and **in that** the heat output of the heating means (6) can be influenced by control signals from the control unit respectively regulating unit (4).

3. Feeding device according to one of the preceding claims, **characterised in that** the control unit respectively regulating unit (4) is integrated with the feeding device (1) or connected in one piece with the latter.

4. Feeding device according to claim 3, **characterised in that** the sensor unit and the control unit respectively regulating unit (4) form a spatial unit.

5. Feeding device according to claim 4, **characterised in that** the sensor unit and the control unit respectively regulating unit (4) are arranged on the conveying device spacially directly adjoining.

6. Feeding device according to one of claims 1 to 5, **characterised in that** the sensor unit includes a piezo element.

7. Feeding device according to one of claims 1 to 5, **characterised in that** the sensor unit includes a Hall sensor element.

8. Method for operating a feeding device (1) according to one of the preceding claims, **characterised in that**, based on the electronic measurement signals from the sensor unit, electronic regulating signals are delivered by the control unit respectively regulating unit (4) to the conveying device, by means of which the feeding velocity of the wire brought about by the conveying device is regulated to a respective pre determined desired value in dependence upon the measured pressure reaction force.

9. Method according to claim 8, **characterised in that** the actual value of the feeding velocity of the wire ascertained by the first contrivance is compared with the pre determined desired value from the control unit respectively regulating unit (4), and the regulating signals delivered by the control unit respectively regulating unit (4) to the conveying device are, if appropriate, adapted accordingly.

10. Method according to claim 9, **characterised in that** the electronic measurement signals for ascertaining the feeding velocity of the wire, which are independently obtained from the first and second contrivances, are compared with one another in the control unit respectively regulating unit (4), and if there is a difference between the two ascertained feeding velocities, the regulating signals delivered to the conveying device are corrected accordingly.

11. Method according to one of claims 9 and 10 for operating a feeding device (1) according to claim 2, **characterised in that** the control unit respectively regulating unit (4) ascertains, from the measured feeding velocity of the wire, the actual speed of melting of the heated free wire end (2), and therefrom derives a regulating signal for regulating the heat output of the heating means (6).

## Revendications

1. Dispositif d'avance (1) pour le déplacement linéaire d'un fil le long d'une direction axiale au moyen d'un dispositif de transport, qui comprend une roue de transport (8) entraînée par un moteur propulseur (7), qui appuie avec sa circonférence rotative contre le fil à transporter de manière transversale à la direction axiale, dans lequel est agencé, sur le côté opposé du fil, une roue secondaire (9) sous la forme d'un pignon de contrepression, qui reçoit à rotation la force de pression de la roue de transport (8) sur le fil qui traverse, dans lequel le dispositif d'avance (1) comprend un support (11), sur lequel est montée, d'une part, une bobine enroulée (10), depuis laquelle le fil à transporter est déroulé, et sur lequel est fixé, d'autre part, le moteur propulseur (7), dans lequel l'extrémité de fil (2) libre dans le sens de transport du fil rencontre dans le sens de transport une surface antagoniste et reçoit en l'occurrence une force de réaction à la pression agissant dans le sens opposé au sens de transport et la transmet dans la direction axiale le long du fil, avec une unité de commande ou de réglage (4), qui délivre un signal de commande au dispositif de transport, qui influence, en particulier qui règle, le déplacement linéaire du fil provoqué par le dispositif de transport, dans lequel il est prévu une unité de capteur pour mesurer la force de réaction à la pression reçue par le fil, qui génère un signal de mesure électronique en fonction de la force de réaction à la pression mesurée, qui est transmis comme signal d'entrée à l'unité de commande ou de réglage (4), dans lequel l'unité de commande ou de réglage (4) délivre, sur la base de la force de réaction à la pression mesurée, un signal de commande pour commander ou régler le déplacement linéaire, provoqué par le dispositif de transport, du fil sur le dispositif de transport, et dans lequel il est prévu un premier dispositif pour établir la vitesse d'avance du fil, qui délivre des signaux de mesure électroniques à l'unité de commande ou de réglage (4),
**caractérisé en ce que**
l'unité de capteur comprend un capteur électromécanique (5) qui est relié de manière rigide, par le biais du support (11), au dispositif d'avance (1)
et **en ce qu'**il est prévu un second dispositif, indépendant du premier dispositif qui permet d'établir la vitesse d'avancement du fil, pour établir la vitesse d'avancement du fil et qui délivre également des signaux de mesure électroniques à l'unité de commande ou de réglage (4).

2. Dispositif d'avance selon l'une quelconque des revendications précédentes, **caractérisé en ce que** le dispositif d'avance (1) fait partie d'une installation de brasage ou de soudage, qui comprend un dispositif de chauffage (6) pouvant être commandé, en particulier réglé, pour chauffer l'extrémité de fil libre (2) et **en ce que** la puissance de chauffage du dispositif de chauffage (6) peut être influencée par des signaux de commande issus de l'unité de commande ou de réglage (4).

3. Dispositif d'avance selon l'une quelconque des revendications précédentes, **caractérisé en ce que** l'unité de commande ou de réglage (4) est intégrée au dispositif d'avance (1) ou est reliée d'un seul tenant à celui-ci.

4. Dispositif d'avance selon la revendication 3, **caractérisé en ce que** l'unité de capteur et l'unité de commande ou de réglage (4) forment une entité spatiale.

5. Dispositif d'avance selon la revendication 4, **caractérisé en ce que** l'unité de capteur et l'unité de commande ou de réglage (4) sont aménagées en position attenante à proximité spatiale immédiate du dispositif de transport.

6. Dispositif d'avance selon l'une quelconque des revendications 1 à 5, **caractérisé en ce que** l'unité de capteur comprend un élément piézoélectrique.

7. Dispositif d'avance selon l'une quelconque des revendications 1 à 5, **caractérisé en ce que** l'unité de capteur comprend un élément de capteur à effet Hall.

8. Procédé pour faire fonctionner un dispositif d'avance (1) selon l'une quelconque des revendications précédentes, **caractérisé en ce que**, depuis l'unité de commande ou de réglage (4), sur la base des signaux de mesure électronique provenant de l'unité de capteur, des signaux de réglage sont délivrés au dispositif de transport, au moyen desquels la vitesse d'avance du fil suscitée par le dispositif de transport est réglée en fonction de la force de réaction à la pression mesurée à une valeur de consigne respective prédéfinie.

9. Procédé selon la revendication 8, **caractérisé en ce que** la valeur effective, établie avec le premier dispositif, de la vitesse d'avance du fil est comparée à la valeur de consigne prédéfinie par l'unité de commande ou de réglage (4) et, éventuellement, les signaux de réglage délivrés par l'unité de commande ou de réglage (4) au dispositif de transport sont adaptés de manière correspondante.

10. Procédé selon la revendication 9, **caractérisé en ce que** dans l'unité de commande ou de réglage (4), les signaux de mesure électroniques indépendants l'un de l'autre, issus des premier et second dispositifs destinés à établir la vitesse d'avance du fil, sont comparés l'un à l'autre et, dans le cas d'une différence des deux vitesses d'avance établies, il s'effectue une correction correspondante des signaux de réglage délivrés au dispositif de transport.

11. Procédé selon l'une quelconque des revendications 9 ou 10 pour faire fonctionner un dispositif d'avance (1) selon la revendication 2, **caractérisé en ce que** dans l'unité de commande ou de réglage (4), la vitesse de fusion actuelle de l'extrémité de fil libre (2) chauffée est établie à partir de la vitesse d'avance mesurée du fil et un signal de réglage en est déduit pour régler la puissance de chauffage du dispositif de chauffage (6).
